# EUROPEAN PATENT APPLICATION

(11) **EP 4 459 691 A1**
(43) Date of publication of application: **06.11.2024**
(21) Application number: 21969843.8
(22) Date of filing: 31.12.2021
(51) Int. Cl.: H01M 4/13, H01M 10/0525, H01M 50/533, H01M 50/536

(54) **BATTERY AND ELECTRONIC DEVICE**

(71) Applicant: Dongguan Amperex Technology Limited, Dongguan City, Guangdong Province 523000 (CN)
(72) Inventor: LV, Fang, Dongguan, Guangdong 523000 (CN); ZHAO, Yi, Dongguan, Guangdong 523000 (CN)
(74) Representative: Icosa
(86) International application number: PCT/CN2021/144028
(87) International publication number: WO 2023/123500

(57) **Abstract**

This application relates to the field of battery technologies, and discloses a battery (2) and an electronic device (3). The battery includes an electrode plate assembly (1), where the electrode plate assembly includes an electrode plate (100) and a first tab (200). The electrode plate includes a current collector (110), where the current collector includes a first conductive material layer, an insulating material layer, and a second conductive material layer that are stacked. The current collector is partially folded so that the current collector has a main body part and a folded part; the first conductive material layer includes a first main body region located in the main body part and a first folded region located in the folded part; the second conductive material layer includes a second main body region located in the main body part and a second folded region located in the folded part; and along a thickness direction of the main body part, at least a part of the second folded region and the first main body region are located on a first side of the main body part. The first tab is electrically connected to both the first main body region and the second folded region. The battery can alleviate the current situation that it is difficult for electrons of the conductive material layer on the side facing away from the tab to flow to the tab.

## Description

### TECHNICAL FIELD

Some embodiments of this application relate to the field of battery technologies, and in particular, to a battery and an electronic device.

### BACKGROUND

A battery is an apparatus that converts external energy into electric energy and that stores the electric energy in the battery, to supply power to an external device (for example, a portable electronic device) as needed. Currently, batteries are widely used in electronic devices such as mobile phones, tablets, and notebook computers.

The electrode plate of a battery includes a current collector and an active material layer provided on the current collector. At present, electrode plates of some batteries in the market use composite current collectors. Specifically, the composite current collector includes an insulating material layer located in the middle and conductive material layers arranged on two sides of the insulating material layer; and the tab of the battery is arranged on one conductive material layer.

During the implementation of this application, the applicant has found that due to the arrangement of the foregoing insulating material layer between the two conductive material layers, it is difficult for electrons of the conductive material layer on the side facing away from the tab to flow to the tab.

### SUMMARY

Some embodiments of this application are intended to provide a battery and an electronic device, so as to alleviate the current situation that it is difficult for electrons of the conductive material layer on the side facing away from the tab to flow to the tab.

The following technical solution is used in some embodiments of this application to solve the technical problem. The solution is specifically described below.

A battery is provided, including an electrode plate assembly, where the electrode plate assembly includes an electrode plate and a first tab. The electrode plate includes a current collector, where the current collector includes a first conductive material layer, an insulating material layer, and a second conductive material layer that are stacked. The current collector is partially folded so that the current collector has a main body part and a folded part; the first conductive material layer includes a first main body region located in the main body part and a first folded region located in the folded part; the second conductive material layer includes a second main body region located in the main body part and a second folded region located in the folded part; and along a thickness direction of the main body part, at least a part of the second folded region and the first main body region are located on a first side of the main body part. The first tab is electrically connected to both the first main body region and the second folded region.

In the battery provided in these embodiments of this application, the first main body region of the first conductive material layer and the second folded region of the second conductive material layer are both connected to the first tab. That is, the battery provided in these embodiments of this application can alleviate the current situation that it is difficult for electrons of the conductive material layer on the side facing away from the tab to flow to the tab.

In some embodiments, the main body part has a first notch, where the first notch is formed by folding the folded part relative to the main body part. The folded part is disposed at a location of the first notch before formed, and the folded part is formed by being partially cut off from the main body part and then folded.

In some embodiments, a contour of an outer edge of the current collector includes two long sides respectively arranged at two ends of the current collector along a first direction and two short sides respectively arranged at two ends of the current collector along a second direction, the first direction intersecting with the second direction. An intersection line between the first main body region and the first folded region is a first intersection line, and an included angle between the first intersection line and an extension direction of the short sides is less than 5°. Thus, the folded part is generally folded along an extension direction of the long side of the current collector.

In some embodiments, the first notch is spaced apart from both of the two short sides.

In some embodiments, the first notch extends to one of the short sides; and/or the first notch extends to one of the long sides. In this way, the first notch in the electrode plate in this embodiment extends through one of the foregoing long sides and/or short sides, so that the processing of at least one slot during manufacturing of the electrode plate can be eliminated, thereby improving the production efficiency of the electrode plate and the battery.

In some embodiments, a contour of an outer edge of the current collector includes two long sides respectively arranged at two ends of the current collector along a first direction and two short sides respectively arranged at two ends of the current collector along a second direction, the first direction intersecting with the second direction. An intersection line between the first main body region and the first folded region is a first intersection line, and an included angle between the first intersection line and the long sides is less than 5°. Thus, the folded part is generally folded along an extension direction of the short side of the current collector.

In some embodiments, the first notch is spaced apart from both of the two long sides of the current collector.

In some embodiments, the first notch extends to one of the long sides; and/or the first notch extends to one of the short sides. In this way, the first notch in the electrode plate in this embodiment extends through one of the foregoing long sides and/or short sides, so that the processing of at least one slot during manufacturing of the electrode plate can be eliminated, thereby improving the production efficiency of the electrode plate and the battery.

In some embodiments, the current collector includes two folded parts, and the first tab is electrically connected to both the two folded parts. The arrangement of two folded parts is conducive to increasing a contact area between the second conductive material layer and the first tab. In addition, an increase in the number of folded parts is also conducive to improving the reliability of contact between the second conductive material layer and the first tab.

In some embodiments, the two folded parts connected to the same tab are folded in opposite directions relative to the main body region.

In some embodiments, the first notches corresponding to the two first folded regions are communicated into one notch. If the two first notches are not communicated with each other, the formation of each folded part requires the arrangement of at least two slots on the current collector, meaning a total of at least four slots need to be cut on the current collector to implement the provision of two folded parts. In this embodiment, through the cutting of at least two slots on the current collector, the provision of two folded parts can be implemented. Therefore, the arrangement of mutual communication between the two first notches is conducive to improving the production efficiency of the electrode plate.

In some embodiments, a contour of an outer edge of the main body part includes two long sides respectively arranged at two ends of the main body part along a first direction and two short sides respectively arranged at two ends of the main body part along a second direction, the first direction intersecting with the second direction. The folded part is connected to the long side or the short side and is stacked on the main body part. The folded part originally lies outside the main body part. Therefore, compared to the foregoing embodiments, no slot cutting is required during the formation of the folded part in the electrode plate, making the folding more convenient to some extent.

In some embodiments, the main body part includes a base part and a connecting part. A contour of an outer edge of the base part includes two long sides respectively arranged at two ends of the base part along a first direction and two short sides respectively arranged at two ends of the base part along a second direction, the first direction intersecting with the second direction. The connecting part is formed by extending outward from an edge of the base part. The folded part is connected to an edge of the connecting part and at least partially stacked on the connecting part and/or the main body part. The folded part originally lies outside the main body part. Therefore, compared to the foregoing embodiments, no slot cutting is required during the formation of the folded part in the electrode plate, making the folding more convenient to some extent.

In some embodiments, the current collector is partially folded so that the current collector has the main body part, the folded part, and a bent part. The first conductive material layer includes the first main body region, the first folded region, and a first bent region located in the bent part; and the second conductive material layer includes the second main body region, the second folded region, and a second bent region located in the bent part. Along a thickness direction of the current collector, at least a part of the first bent region and the second main body region are located at a second side of the current collector, where the first side and the second side are two opposite sides of the current collector along the thickness direction. The battery further includes a second tab, where the second tab is electrically connected to both the second main body region and the first bent region, and the first tab is electrically connected to the second tab. The first tab is arranged to be electrically connected to both the first conductive material layer and the second conductive material layer. The second tab is arranged to aim to further reduce an internal resistance of the electrode plate. In this embodiment, the first tab and the second tab are staggered along an extension direction of the foregoing long side, which is conducive to reducing the overall thickness of the electrode plate assembly. In other embodiments of this application, the first tab and the second tab may alternatively be located on a same side of the main body part, equivalent to provision of two first tabs. However, compared with this, under the condition that shapes and structures of the folded part and the bent part are basically the same, the provision on different sides is conducive to ensuring that a total area by which the first conductive material layer is connected to the two tabs is close to, or even the same as, a total area by which the second conductive material layer is connected to the two tabs.

In some embodiments, the electrode plate further includes an active material layer. A surface of the first conductive material layer has a first coating region provided with the active material layer and a first blank region not provided with the active material layer, and the folded part, the notch, and the first tab are arranged in the first blank region. A surface of the second conductive material layer has a second coating region provided with the active material layer and a second blank region not provided with the active material layer, and an end of the notch is communicated with the second blank region.

In some embodiments, the battery includes two electrode plate assemblies and a separator, where the separator is arranged between the two electrode plate assemblies. In the two electrode plate assemblies, the electrode plate in one electrode plate assembly constitutes the positive electrode plate of the battery, while the electrode plate in the other electrode plate assembly constitutes the negative electrode plate of the battery. The separator is arranged between the two electrode plate assemblies to separate the two electrode plate assemblies.

The following technical solution is further used in some embodiments of this application to solve the technical problem. The solution is specifically described below.

An electronic device is provided, including the battery according to any of the foregoing embodiments.

### DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.
FIG. 1 is a front view of an electrode plate assembly according to an embodiment of this application;
FIG. 2 is a top view of FIG. 1;
FIG. 3 is a locally enlarged schematic view of position A in FIG. 2;
FIG. 4 is a front view of an electrode plate in FIG. 1;
FIG. 5 is a schematic diagram of a current collector of the electrode plate in FIG. 4 in a state before folding;
FIG. 6 is a schematic diagram of an electrode plate according to a second embodiment of this application;
FIG. 7 is a schematic diagram of an electrode plate according to a third embodiment of this application;
FIG. 8 is a schematic diagram of an electrode plate according to a fourth embodiment of this application;
FIG. 9 is a schematic diagram of a current collector of the electrode plate in FIG. 8 in a state before folding;
FIG. 10 is a schematic diagram of an electrode plate according to a fifth embodiment of this application;
FIG. 11 is a schematic diagram of an electrode plate according to a sixth embodiment of this application;
FIG. 12 is a top view of FIG. 11;
FIG. 13 is a front view of an electrode plate assembly according to the second embodiment of this application;
FIG. 14 is a locally enlarged schematic view of position B in FIG. 13;
FIG. 15 is a locally enlarged schematic view of position C in FIG. 13;
FIG. 16 is a schematic diagram of a battery according to an embodiment of this application; and
FIG. 17 is a schematic diagram of an electronic device according to an embodiment of this application.

### Reference signs:

1. electrode plate assembly;
100. electrode plate; 110. current collector; 120. active material layer; 111. insulating material layer; 112. first conductive material layer; 113. second conductive material layer; 114. main body part; 115. folded part; 11201. first coating region; 1121. first main body region; 1122. first folded region; 1131. second main body region; 1132. second folded region; 1101. long side; 1102. short side; 1103. first notch; 1104. through slot; 11041. first slot; 11042. second slot; 11043. third slot; 11202. first blank region; 11301. second coating region; 11302, second blank region;
200. first tab;
100b. electrode plate; 110b. current collector; 114b. main body region; 115b. folded part; 1101b. long side; 1102b. short side; 1103b. first notch;
100c. electrode plate; 110c. current collector; 114c. main body part; 115c. folded part; 1101c. long side; 1102c. short side; 1103c. first notch;
100d. electrode plate; 110d. current collector; 114d. main body part; 115d. folded part; 1101d. long side; 1102d. short side; 1103d. first notch; 1104d. through slot; 11041d. first slot; 11042d. second slot;
100e. electrode plate; 110e. current collector; 114e. main body part; 115e. folded part; 1101e. long side; 1102e. short side;
100f. electrode plate; 110f. current collector; 114f. main body part; 115f. folded part; 1101f. long side; 1102f. short side; 1141f. base part; 1142f. connecting part;
1g. electrode plate assembly;
100g. electrode plate; 110g. current collector; 112g. first conductive material layer; 113g. second conductive material layer; 114g. main body part; 115g. folded part; 116g. bent part; 1121g. first main body region; 1122g. first folded region; 1123g. first bent region; 1131g. second main body region; 1132g. second folded region; 1133g. second bent region;
200g. second tab;
300g. third tab;
M. first side; N. second side; X. first direction; Y second direction; Z. third direction; and L₁. first intersection line.

### DETAILED DESCRIPTION

For ease of understanding of this application, the following describes this application in more detail with reference to the accompanying drawings and specific embodiments. It should be noted that when an element is referred to as being "fixed to", "fastened to", or "mounted to" another element, it may be directly fixed to the another element, or there may be one or more elements therebetween. When an element is referred to as being "connected to" another element, it may be directly connected to the another element, or there may be one or more elements therebetween. The terms "perpendicular", "horizontal", "left", "right", "inside", "outside", and similar expressions used herein are merely for description purposes.

Unless otherwise defined, all technical and scientific terms used herein shall have the same meanings as commonly understood by persons skilled in the art to which this application belongs. The terms used in the specification of this application are merely intended to describe specific embodiments rather than to limit this application. The term "and/or" used herein includes any and all combinations of one or more associated items listed.

In addition, technical features involved in different embodiments of this application that are described below may be combined as long as they do not conflict with each other.

In this specification, "mounting" includes fixing or limiting an element or apparatus to a specific position or place by welding, screwing, clamping, bonding, or the like. The element or apparatus may stay still at the specific position or place, or may move within a limited range. After being fixed or limited to the specific position or place, the element or apparatus can be disassembled or cannot be disassembled. This is not limited in some embodiments of this application.

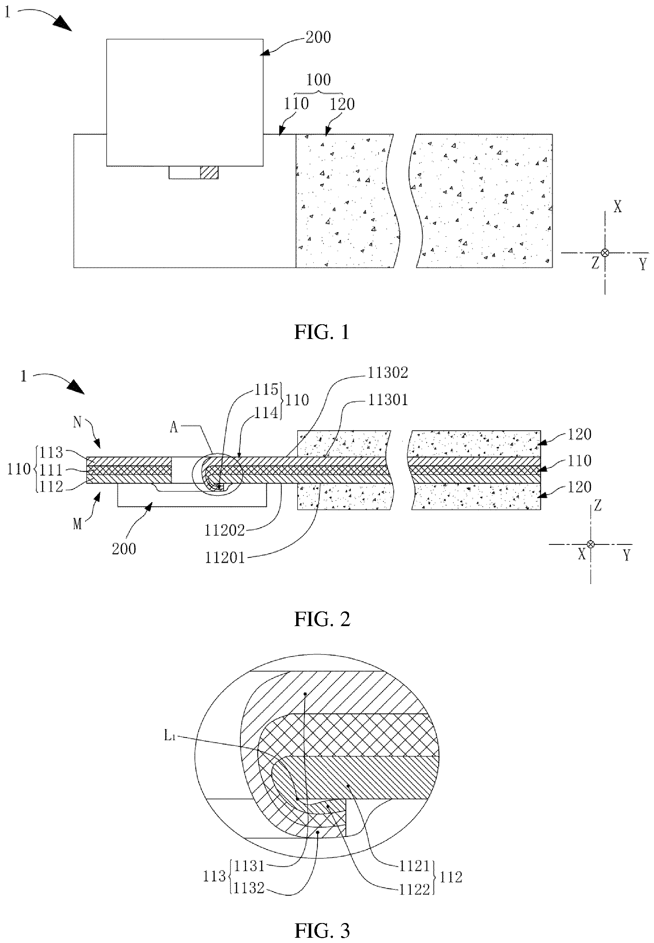

This application provides an electrode plate assembly 1, referring to FIGs. 1 to 3, which respectively show the front view, top view, and locally enlarged schematic view at position A of the electrode plate assembly 1 according to an embodiment of this application. The electrode plate assembly 1 includes an electrode plate 100 and a first tab 200. The electrode plate 100 includes a current collector 110, where the current collector 110 includes a first conductive material layer 112, an insulating material layer 111, and a second conductive material layer 113 that are stacked, and the insulating material layer 111 is located between the first conductive material layer 112 and the second conductive material layer 113. The current collector 110 is partially folded so that the current collector 110 has a main body part 114 and a folded part 115; correspondingly, the first conductive material layer 112 includes a first main body region 1121 located in the main body part 114 and a first folded region 1122 located in the folded part 115; and the second conductive material layer 113 includes a second main body region 1131 located in the main body part 114 and a second folded region 1132 located in the folded part 115. Along a thickness direction Z of the main body part 114, at least a part of the second folded region 1132 and the first main body region 1121 are located on a first side M of the main body part 114; and the first tab 200 is electrically connected to both the first main body region 1121 and the second folded region 1132.

To better understand the specific structure of the electrode plate assembly 1, the electrode plate 100 and the first tab 200 are described in turn in the following.

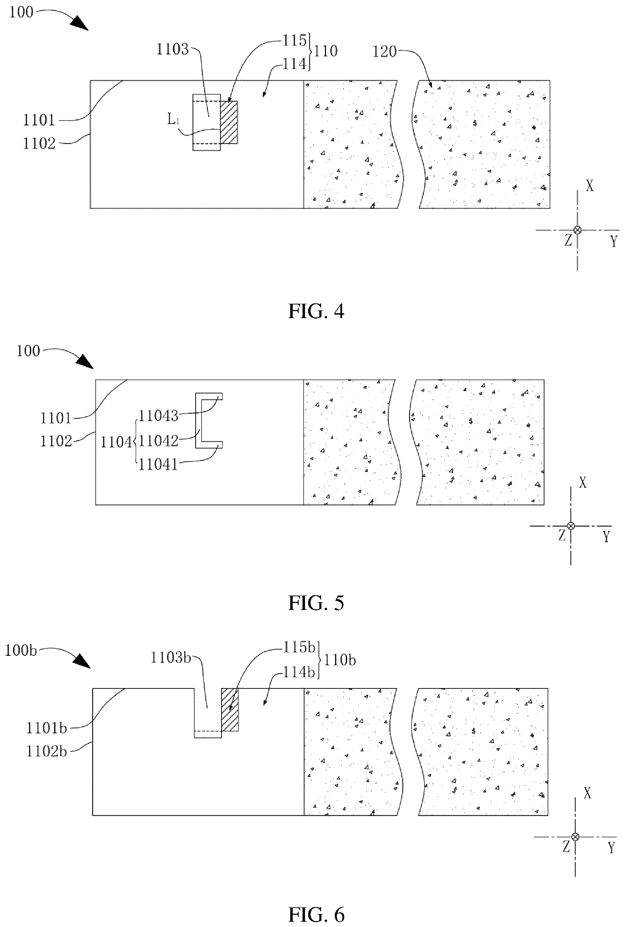

For the foregoing electrode plate 100, specifically refer to FIG. 4, which shows a front view of the electrode plate 100. In addition, with reference to FIGs. 1 to 3, the electrode plate 100 includes a current collector 110 and an active material layer 120. The current collector 110 has a long sheet-like structure. A contour of its outer edge includes two long sides 1101 respectively arranged at its two ends along a first direction X, and two short sides 1102 respectively arranged at its two ends along a second direction Y; where the first direction X intersects with the second direction Y The long side 1101 is the long side of the current collector 110 in a flattened state, and an extension direction of the long side 1101 is an extension direction of the current collector 110. When the current collector 110 is flattened, it extends straight; and when the current collector 110 is wound, it extends curvedly. The short side 1102 is the short side of the current collector 110 in a flattened state, and an extension direction of the short side 1102 is a width direction of the current collector 110 when it is flattened. In this embodiment, the long side 1101 is perpendicular to the short side 1102, meaning that the first direction X is perpendicular to the second direction Y. However, in other embodiments, the included angle between the long side 1101 and the short side 1102 may also be set to other values. It is worth noting that thickness of the current collector 110 is very small compared with thickness of the active material layer 120. The thickness of the current collector 110 is generally less than 200 micrometers (µm), and most current collectors on the current market do not exceed 100 µm in thickness. In FIG. 2, to better illustrate the structure of the current collector 110, its dimension in a thickness direction is exaggerated. However, it should be understood that the thickness proportion relationship between the current collector 110 and the active material layer 120 depicted in the figure does not impose limitations on the thickness proportion relationships between actual electrode plate products.

For the foregoing current collector 110, refer to FIGs. 1 to 4. In this embodiment, the current collector 110 is a composite current collector. Specifically, it includes a first conductive material layer 112, an insulating material layer 111, and a second conductive material layer 113 that are stacked sequentially in the thickness direction. The insulating material layer 111 is made of an insulating material and serves as a substrate for the first conductive material layer 112 and the second conductive material layer 113. It also physically separates the first conductive material layer 112 from the second conductive material layer 113. Optionally, the insulating material layer 111 includes a polymer material; and further optionally, the insulating material layer 111 includes at least one of polyethylene, polypropylene, polystyrene, polymethyl methacrylate, polyvinyl chloride, nylon, polycarbonate, polyurethane, polytetrafluoroethylene, polyethylene terephthalate, epoxy resin, phenolic plastic, polyimide, or melamine formaldehyde resin. The first conductive material layer 112 and the second conductive material layer 113 are made of conductive materials and are respectively placed on two sides of the insulating material layer 111. The specific material of the first conductive material layer 112 and the second conductive material layer 113 are not limited in this application. For example, in this embodiment, the electrode plate 100 is an anode plate, and the first conductive material layer 112 and/or the second conductive material layer 113 may be made of copper. It can be understood that in other embodiments of this application, the first conductive material layer 112 and/or the second conductive material layer 113 may alternatively be made of other suitable conductive materials such as copper alloys, nickel, or nickel alloys, which are not described in detail herein. Furthermore, in other embodiments of this application, the electrode plate 100 may alternatively be a cathode plate. In this case, the first conductive material layer 112 and/or the second conductive material layer 113 may be made of suitable conductive materials such as aluminum or aluminum alloys, which are not described in detail herein. As for the method of arranging the first conductive material layer 112 and the second conductive material layer 113 on the insulating material layer 111, it may be electroplating, spraying, or adhesive bonding, which is not limited in this application.

A part of the current collector 110 is folded relative to other parts, such that the current collector 110 has a main body part 114 and a folded part 115 which are interconnected. In this embodiment, the main body part 114 is overall strip-shaped and is the main body of the current collector 110. The main body part 114 has a first side M and a second side N oppositely arranged in its thickness direction Z, where the first side M is a side of the main body part 114 provided with the first conductive material layer 112, and the second side N is a side of the main body part 114 provided with the second conductive material layer 113. The folded part 115 is located on the first side M of the main body part 114 and is arranged opposite the main body part 114. It is a part of the current collector 110 that is folded relative to the main body part 114 to be at least partially arranged on the first side M of the main body part 114. As a result, the foregoing first conductive material layer 112 includes two parts due to the partial folding arrangement of the current collector 110, specifically, the first main body region 1121 located in the main body part 114 and the first folded region 1122 located in the folded part 115. Similarly, the second conductive material layer 113 includes the second main body region 1131 located in the main body part 114 and the second folded region 1132 located in the folded part 115.

In this embodiment, the main body part 114 has a first notch 1103, where the first notch 1103 is formed by folding the folded part 115 relative to the main body part 114; specifically, before formed, the folded part 115 is disposed at a location of the first notch 1103, and it is formed by being partially cut off from the main body part 114 and then folded. More specifically, along the extension direction of the long side 1101, the first notch 1103 is located between the two short sides 1102, that is, the first notch 1103 is spaced apart from both of the two short sides 1102; along the extension direction of the foregoing short sides 1102, two ends of the first notch 1103 are located between the two long sides 1101, that is, the first notch 1103 is spaced apart from both of the two long sides 1101. This makes the edge contour of the first notch 1103 on the surface of the first conductive material layer 112 closed, such as the rectangle shown in FIG. 4.

The folded part 115 is folded relative to the main body part 114, so that the first notch 1103 is formed on the main body part 114, and in addition, a first intersection line L₁ is formed between the first main body region 1121 and the first folded region 1122. In this embodiment, the first intersection line L₁ is approximately parallel to the extension direction of the short side 1102, and an included angle between the first intersection line L₁ and the extension direction of the short side 1102 is less than 5°, meaning that the folded part 115 and the short side 1102 are arranged as parallel or approximately parallel to each other. It should be noted that absolute parallelism or perpendicularity between two components (or parts) in a physical object generally does not exist, because as long as the measuring instrument has sufficient accuracy, the result of measuring the included angle between the two components always deviates from being perfectly parallel or perpendicular. Therefore, the term "approximately parallel" as used in this application document means that the two components (or parts) are arranged to be close to parallel, for example, the included angle between the two components (or parts) is less than 5°; likewise, the term "approximately perpendicular" as used in this application document means that the included angle between the two components (or parts) is greater than 85° and less than 95°. Furthermore, a folded edge is formed on the outer surface at the junction after the folded part 115 is folded relative to the main body part 114, and the folded edge is parallel to the first intersection line L₁. Therefore, the measurement of the foregoing included angle may be indirectly conducted through the folded edge.

Next, a brief explanation of a forming process of the current collector 110 will be provided. Referring to FIG. 5, which shows a schematic diagram of the current collector 110 in a state before folding, in conjunction with other figures, the specific steps are described as follows:

S 110: Form a current collector 110 with an overall rectangular shape. For example, in some embodiments, the insulating material layer is first formed. Then, using this insulating material layer 111 as a substrate, metal material is sprayed or electroplated on two sides of the insulating material layer 111 to form the first conductive material layer 112 and the second conductive material layer 113.

S120: Form a through slot 1104 as shown in FIG. 5 on the current collector 110. For example, in some embodiments, the through slot 1104 is cut by laser cutting, and the through slot 1104 includes a first slot 11041, a second slot 11042, and a third slot 11043. The first slot 11041 and the third slot 11043 are arranged opposite each other, and both are approximately parallel to the foregoing long side 1101. The second slot 11042 communicates with the first slot 11041 and the third slot 11043. Thus, a sheet-like structure is formed by the first slot 11041, the third slot 11043, and the second slot 11042 shown in FIG. 5, which can be folded relative to the main body part 114. It can be understood that in other embodiments, the through slot 1104 can alternatively be formed in other ways, which is not limited in this application.

S130: Fold the sheet-like structure in a direction leaving the third slot 11043 and make it located on the first side M of the main body part 114. Specifically, the sheet-like structure shown in FIG. 5 is folded to the right and made to be located on the first side of the main body part 114, thus obtaining the folded part 115 as shown in FIG. 4. In addition, after the folded part 115 is folded, the first notch 1103 of basically a same size is formed on the main body part 114, which together with the through slot 1104 forms a complete rectangular notch structure.

For the foregoing active material layer 120, refer to FIG. 2 in combination with other accompanying drawings for details. The active material layer 120 is arranged on the surface of the current collector 110 and is a material layer for intercalation and deintercalation of lithium ions. Specifically, a surface of the first conductive material layer 112 has a first coating region 11201 and a first blank region 11202; where the first coating region 11201 is coated with the active material layer 120, and the first blank region 11202 is an exposed region not provided with the active material layer 120. That is to say, the surface of the first conductive material layer 112 has the first coating region 11201 provided with the active material layer 120 and the first blank region 11202 not provided with the active material layer 120. Similarly, the surface of the second conductive material layer 113 also has a second coating region 11301 provided with the active material layer 120 and a second blank region 11302 not provided with the active material layer 120. The foregoing first blank region 11202 is arranged opposite the second blank region 11302; the folded part 115 and the first notch 1103 are both disposed at the first blank region 11202, and one end of the first notch 1103 away from the first blank region 11202 runs through the second blank region 11302.

For the foregoing first tab 200, refer to FIG. 2 in conjunction with other accompanying drawings for details. The first tab 200 is mounted on the current collector 110, and is electrically connected to both the first main body region 1121 and the second folded region 1132, thereby allowing both the first conductive material layer 112 and the second conductive material layer 113 to be electrically connected to the first tab 200. Specifically, the first tab 200 has a flat strip-like structure; one end of the first tab 200 is fixed to the first blank region 11202, covering at least a portion of each of the foregoing folded parts 115, thereby achieving simultaneous electrical connection to the first main body region 1121 and the second folded region 1132; and another end of the first tab 200 extends out of the current collector 110, which is conducive to the formation of a conductive terminal of a battery for external connection to an electric apparatus when the electrode plate assembly 1 is applied to the battery. As for the method of fixing the first tab 200 to the first main body region 1121, various options are available, which are not specifically limited in this application. For example, the first tab 200 may be fixed to the first main body region 1121 by welding, conductive adhesive bonding, riveting, or other methods, which are not described in detail herein.

It should be understood that even in this embodiment, the current collector 110 includes a folded part 115 and the contour of the corresponding first notch 1103 on the surface of the first conductive material layer 112 is closed, that is, the first notch 1103 is spaced apart from both of the two long sides 1101 along the first direction X, and the first notch 1103 is spaced apart from both of the two short sides along the second direction Y, but this application is not limited to this.

For example, FIG. 6 is a schematic diagram of the electrode plate 100b provided in a second embodiment of this application. The current collector 110b of the electrode plate 100b also includes a main body part 114b and a folded part 115b, and the first notch 1103b formed corresponding to the folded part 115b is still spaced apart from both of the two short sides 1102 along the second direction Y. The main difference between this electrode plate 100b and the electrode plate 100 in the foregoing embodiments is that the contour of the first notch 1103 in the electrode plate 100 on the surface of the first conductive material layer 112 is closed; while the contour of the first notch 1103b in this electrode plate 100b on the surface of the first conductive material layer 112 is non-closed. Specifically, along the first direction X, one end of the first notch 1103b in the electrode plate 100b is located between the two long sides 1101b, while the other end extends to one long side 1101b; that is, one end of the first notch 1103b traverses one long side 1101b.

Compared with the electrode plate 100 in the foregoing embodiments, because one end of the first notch 1103b traverses one long side 1101b, the electrode plate 100b in this embodiment allows for avoiding the processing of the third slot during manufacturing of the electrode plate 100b. This can enhance the production efficiency of the electrode plate 100b and the battery.

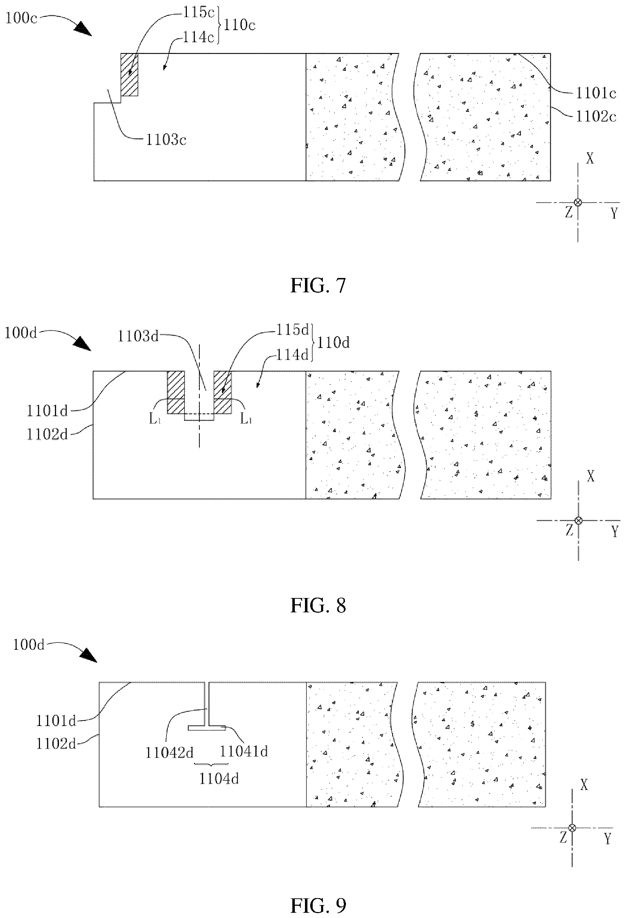

For another example, FIG. 7 is a schematic diagram of the electrode plate 100c provided in a third embodiment of this application, and with reference to FIGs. 1 to 6, the current collector 110c of the electrode plate 100c still includes a main body part 114c and a folded part 115c, which is different from the electrode plate 100b in the second embodiment mainly in that: in the second direction Y, both of the two ends of the first notch 1103b in the electrode plate 100b are spaced apart from the two short sides 1102b; while in the electrode plate 100c, one end of the first notch 1103c is located between the two short sides 1102c and is spaced apart from both of the two short sides 1102c, and the other end of the first notch 1103c extends to one short side 1102c, so that one end of the first notch 1103c in the second direction Y traverses one short side 1102c.

Compared with the electrode plate 100b in the second embodiment, the electrode plate 100c in this embodiment not only traverses one long side 1101c at one end along the first direction X, but also traverses one short side 1102c at one end along the second direction Y. Therefore, the electrode plate 100c can avoid the processing of the second slot during manufacturing, thereby improving the production efficiency of the electrode plate 100c and the battery. Of course, other embodiments of this application can also make adaptive modifications based on this embodiment. For example, in some embodiments, along the second direction Y, one end of the first notch 1103c still traverses one short side 1102c, but along the first direction X, both ends of the first notch 1103c are spaced apart from the two long sides 1101c.

For another example, FIG. 8 is a schematic diagram of the electrode plate 100d provided in a fourth embodiment of this application. The current collector 110d of the electrode plate 100d still includes a main body part 114d and a folded part 115d. This electrode plate 100d is different from the electrode plate 100b in the foregoing second embodiment mainly in that the current collector 110b of the electrode plate 100b in the second embodiment includes a main body part 114b and one folded part 115d; while the current collector 110d of this electrode plate 100d includes a main body part 114d and two folded parts 115d. Specifically, the two folded parts 115 are staggered along the second direction Y, and the first intersection lines L₁ formed by the two folded parts 115d are approximately parallel to each other. The two folded parts 115d are both connected to the foregoing first tab 200. Optionally, the two folded parts 115d are folded in opposite directions relative to the main body part 114d. Further optionally, each folded part 115d is folded in a direction leaving the other folded part 115d; for example, as shown in FIG. 8, the folded part 115 on the left of the figure is folded to the left relative to the main body part 114, while the folded part 115 on the right of the figure is folded to the right relative to the main body part 114. Further optionally, the first notches 1103d corresponding to the two folded parts 115d are communicated, thereby forming a single notch.

Refer to Fig. 9, which is a schematic diagram of the electrode plate 100d in a state before formed. Next, a formation process of the electrode plate 100d will be briefly explained in conjunction with FIG. 9 and other accompanying drawings.

First, a current collector 110d with an overall rectangular shape is formed. For example, in some embodiments, the insulating material layer is first formed. Then, using this insulating material layer as a substrate, metal material is electroplated or sprayed on two sides of the insulating material layer to form the first conductive material layer and the second conductive material layer. Then, a T-shaped through slot 1104d as shown in FIG. 9 is formed on the current collector 110d. The through slot 1104d includes a first slot 11041d approximately parallel to the long side 1101d, and a second slot 11042d extending from the middle of the first slot 11041d to traverse one long side 1101d. Thus, a sheet-like structure is formed on the right of the second slot 11042d and above the first slot 11041d, as shown in FIG. 5, which can be folded relative to the main body part 114d, and another sheet-like structure is formed on the left of the second slot 11042d and above the first slot 11041d, which can be folded relative to the main body part 114d. In some embodiments, the foregoing T-shaped through slot may be formed by laser cutting. Of course, in other embodiments, the T-shaped through slot may be formed by other methods, which is not limited in this application. Next, each sheet-like structure on both sides of the second slot 11042 is folded away from the other sheet-like structure and is made to be located on the first side of the main body part 114d. Specifically, the sheet-like structure on the left as shown in FIG. 5 is folded to the short side on the left and is made to be located on the first side of the main body part 114d. Thus, a folded part 115d on the left as shown in FIG. 4 is obtained. Then, the sheet-like structure on the right as shown in FIG. 5 is folded to the right and is made to be located on the first side M of the main body part 114d. Thus, a folded part 115d on the right as shown in FIG. 4 is obtained. In this case, the two first notches 1103d are communicated to form a single notch.

Compared with the electrode plates provided in the first to third embodiments, the arrangement of two folded parts 115d is conducive to increasing a contact area between the second conductive material layer and the first tab 200. In addition, an increase in the number of folded parts 115d is also conducive to improving the reliability of contact between the second conductive material layer and the first tab 200. In addition, the arrangement that two first notches 1103d communicate with each other to form a single notch is conducive to improving the production efficiency of the electrode plate 100. Specifically, if the two first notches 1103d do not communicate with each other, the formation of each folded part 115d requires the arrangement of two slots on the current collector 110d, meaning a total of four slots need to be cut on the current collector 110d to implement the provision of two folded parts 115d. In this embodiment, through the cutting of two slots (the first slot 11041d and the second slot 11042d) on the current collector 110d, the provision of two folded parts 115d can be implemented. Therefore, the arrangement of mutual communication between the two first notches 1103 is conducive to improving the production efficiency of the electrode plate 100.

It can be understood that although the first intersection lines L₁ corresponding to the two folded parts 115d of the current collector 110 in the fourth embodiment are arranged as approximately parallel to each other, this application can still make adaptive modifications based on this. For example, in some other embodiments, the first intersection lines L₁ corresponding to the two folded parts 115d are perpendicular to each other, meaning that the folding directions of the two folded parts 115d relative to the main body part 114 are perpendicular to each other. Of course, in some other embodiments, the first intersection lines L₁ corresponding to the two folded parts 115d may be arranged at other included angles. Furthermore, in combination with the foregoing first to third embodiments, it can be understood that this application may make adaptive modifications based on the fourth embodiment. For example, the notch formed after the two first notches 1103d are communicated can traverse one long side at one end as in the second and fourth embodiments, traverse one short side at one end as in the third embodiment, or present a closed contour on the surface of the first conductive material layer as in the first embodiment.

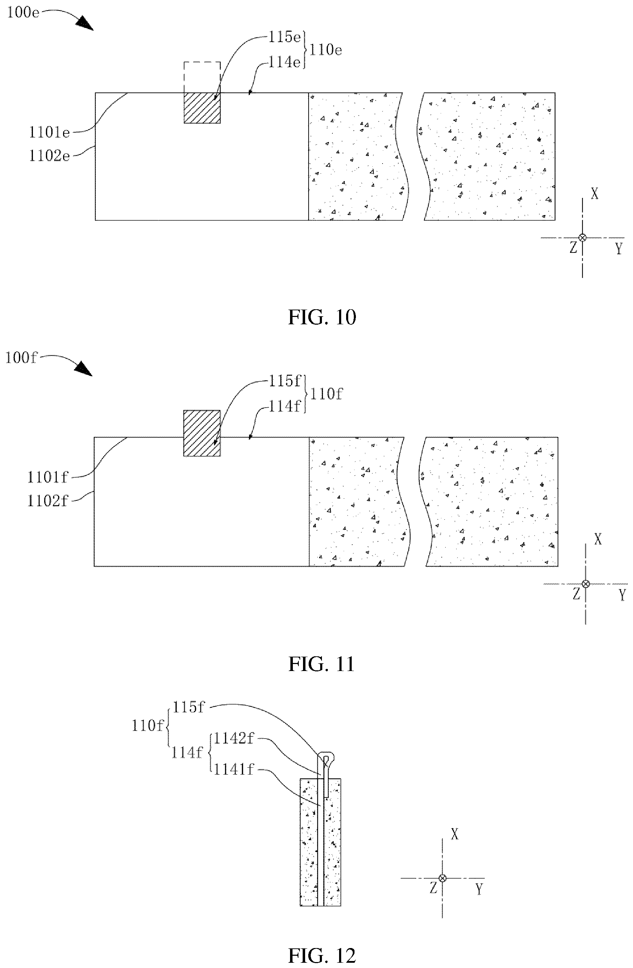

For another example, FIG. 10 is a schematic diagram of the electrode plate 100e provided in a fifth embodiment of this application. The current collector 110e of the electrode plate 100e also includes a main body part 114e and a folded part 115e. This electrode plate 100e is different from the electrode plates in the foregoing embodiments mainly in that in the electrode plate 100e, the folding of the folded part 115e relative to the main body part 114e does not form the foregoing first notch. Specifically, the current collector 110e includes a main body part 114e and a folded part 115e. A contour of the outer edge of the main body part 114e includes two long sides 1101e respectively arranged at two ends of the main body part 114e along the first direction X and two short sides 1102e respectively arranged at two ends of the main body part 114e along the second direction Y. In this embodiment, the main body part 114e is rectangular in shape. The folded part 115e is connected to the foregoing long side or short side; which is folded relative to the main body part 114e to be stacked on the first side of the main body part 114e. It is worth adding that the dashed lines in FIG. 10 indicate the position of the folded part 115e before folding.

The folded part 115e originally lies outside the main body part 114e. Therefore, compared to the foregoing first to fourth embodiments, no slot cutting is required during the formation of the folded part 115e in the electrode plate 100e, making the folding more convenient to some extent.

For another example, FIG. 11 is a schematic diagram of the electrode plate 100f provided in a sixth embodiment of this application, and FIG. 12 is a top view of FIG. 11. The current collector 110f of the electrode plate 100f also includes a main body part 114f and a folded part 115f. With reference to FIGs. 1 to 10, it can be seen that the main difference between the electrode plate 100f and the electrode plates in the first to fourth embodiments is that in the electrode plate 100f, the first notch is not formed when the folded part 115f is folded relative to the main body part 114f. Specifically, the current collector 110f also includes a main body part 114f and a folded part 115f. The main body part 114f includes a base part 1141f and a connecting part 1142f. A contour of the outer edge of the base part 1141f includes two long sides 1101f respectively arranged at two ends of the base part 1141f in the first direction X and two short sides 1102f respectively arranged at two ends of the base part 1141f in the second direction Y. In this embodiment, the main body part 114e is rectangular in shape. The connecting part 1142f is connected to the long side 1101f or the short side 1102f and is formed by extending outward from an edge of the base part 1141f. The connecting part 1142f, together with the base part 1141f, forms a convex structure. The folded part 115f is connected to an edge of the connecting part 1142f and has a sheet-like structure. The folded part 115f is folded relative to the main body part 114f and is stacked on the first side of the main body part 114e. For example, in this embodiment, at least a portion of the folded part 115f is stacked on the base part 1141f and the connecting part 1142f. It can be understood that in other embodiments of this application, the folded part 115f may also be stacked on either the base part 1141f or the connecting part 1142f.

It is worth adding that the "long lateral side"/"long side" mentioned in this application document refers to a side of its main body element (such as the foregoing main body part and base part) extending along the length direction, and located at the outermost of the main body element in the width direction. The "short lateral side"/"short side" mentioned in this application document refers to a side of its main body element (such as the foregoing main body part and base part) extending along the width direction and located at the outermost of the main body element in the length direction.

The folded part 115f originally lies outside the main body part 114f. Therefore, compared with the foregoing first to fourth embodiments, no slot cutting is required during the formation of the folded part 115f in the electrode plate 100f, making the folding more convenient to some extent.

To sum up, in the electrode plate assembly 1 provided in these embodiments of this application, the first main body region 1121 of the first conductive material layer 112 and the second folded region 1132 of the second conductive material layer 113 are both electrically connected to the first tab 200. That is, the electrode plate assembly 1 provided in these embodiments of this application can alleviate the current situation that it is difficult for electrons of the conductive material layer on the side facing away from the tab to flow to the tab.

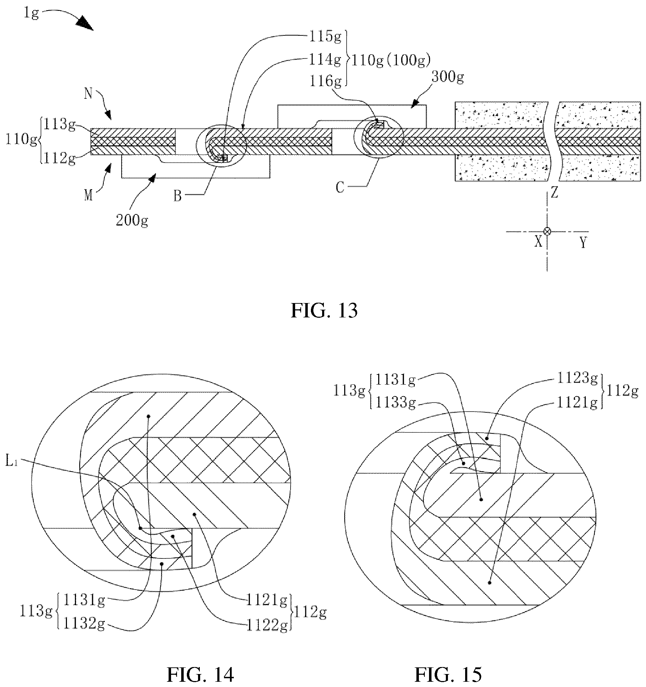

In addition, based on the first embodiment, this application further improves it and provides another electrode plate assembly 1g. Refer to FIG. 13, which is a front view of the electrode plate assembly 1g. The electrode plate assembly 1g still includes an electrode plate 100g and a first tab 200g. The main difference between the electrode plate assembly 1g and the electrode plates in the foregoing embodiments is that in the electrode plate assembly 1g, in addition to a main body part 114g and a folded part 115g, the electrode plate 100g further includes a bent part 116g; and correspondingly, the electrode plate assembly 1g further includes a second tab 300g.

Specifically, the current collector 110g is locally folded at least two positions, such that the current collector 110g has a main body part 114g, a folded part 115g, and a bent part 116g. Here, the connection relationship between the main body part 114g and the folded part 115g is the same as that in the arrangement of the electrode plate 100 in the first embodiment, and will not be repeated herein. The bent part 116g is folded relative to the main body part 114g, and its shape is generally the same as that of the folded part 115g. The difference is that the bent part 116g is located on the second side N of the main body part 114g; that is, along the thickness direction Z of the main body part 114g, the bent part 116g and the folded part 115g are arranged on two sides of the main body part 114g.

Refer to FIGs. 14 and 15, which are respectively locally enlarged schematic views of positions B and C in FIG. 13. The first conductive material layer 112g includes a first main body region 1121 located in the main body part 114g, a first folded region 1122g located in the folded part 115g, and a first bent region 1123 located in the bent part 116g; and similarly, the second conductive material layer 113g includes a second main body region 1131 located in the main body part 114g, a second folded region 1132g located in the folded part 115g, and a second bent region 1133g located in the bent part 116g. Along the thickness direction Z, the first main body region 1121g and at least a portion of the second folded region 1132 are located on the first side M, and the first tab 200g is arranged on the first side M of the main body part 114g and is electrically connected to both the first main body region 1121g and the second folded region 1132g. The second main body region 1131g and at least a portion of the first bent region 1123g are located at the second side N of the current collector 110g, and the second tab 300g is arranged on the second side N of the main body part 114g and is electrically connected to both the second main body region 1131g and the first bent region 1123g. The first tab 200g and the second tab 300g are electrically connected. The first tab 200g is arranged to be electrically connected to both the first conductive material layer 112g and the second conductive material layer 113g. The second tab 300g is arranged aiming to further reduce internal resistance of the electrode plate 100g. Preferably, the first tab 200g and the second tab 300g are staggered along an extension direction of the foregoing long side, which is conducive to reducing the overall thickness of the electrode plate assembly 1g.

It can be understood that in other embodiments of this application, the first tab 200g and the second tab 300g may alternatively be located on a same side of the main body part 114g, equivalent to provision of two first tabs 200g. However, compared with this, under the condition that shapes and structures of the folded part 115g and the bent part 116g are basically the same, the provision on different sides is conducive to ensuring that a total area by which the first conductive material layer 112g is connected to the two tabs is close to, or even the same as, a total area by which the second conductive material layer 113 is connected to the two tabs, thereby ensuring better electron conduction effect.

It should be understood that although the bent part 116g in this embodiment is combined with the electrode plate assembly 1 in the foregoing first embodiment, it can also be combined with the electrode plate assembly 1 in the foregoing second to fourth embodiments. The connection method is basically the same, and details are not repeated herein again.

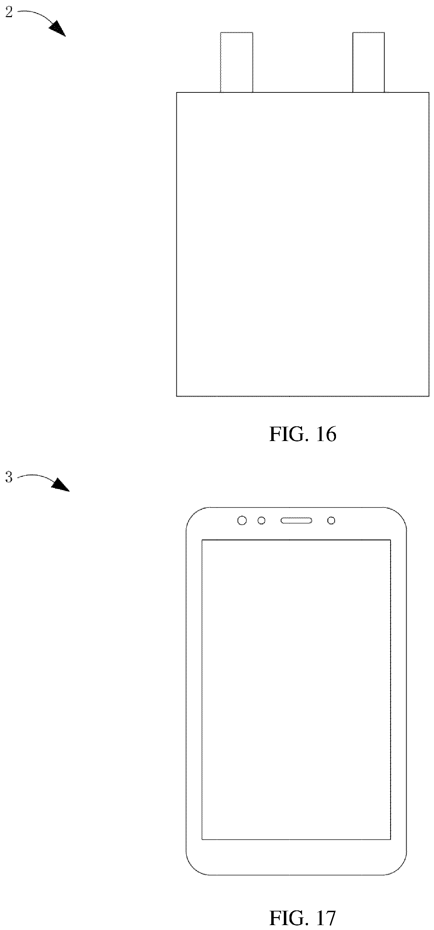

Based on the same inventive concept, this application further provides a battery. Refer to FIG. 16, which is a schematic diagram of the battery 2. The battery 2 includes a housing 21 and an electrode plate assembly according to any one of the foregoing embodiments. In this embodiment, the battery 2 includes two foregoing electrode plate assemblies and a separator. Specifically, in the two electrode plate assemblies, the electrode plate in one electrode plate assembly constitutes the positive electrode plate of the battery 2, while the electrode plate in the other electrode plate assembly constitutes the negative electrode plate of the battery 2. The separator is arranged between the two electrode plate assemblies to separate the two electrode plate assemblies.

The battery 2 includes the foregoing electrode plate assembly, so it can also alleviate the current situation that it is difficult for electrons of the conductive material layer on the side facing away from the tab to flow to the tab.

It can be understood that in other embodiments, the battery 2 may only include one of the foregoing electrode plate assemblies, one conventional electrode plate, and one conventional tab. Specifically, the electrode plate in the electrode plate assembly constitutes the positive electrode plate (or negative electrode plate) of the battery 2, the first tab in the electrode plate assembly constitutes the positive tab (or negative tab) of the battery 2, the conventional electrode plate constitutes the negative electrode plate (or positive electrode plate) of the battery 2, and the conventional tab constitutes the negative tab (or positive tab) of the battery 2.

Based on the same inventive concept, another embodiment of this application further provides an electronic device 3. Specifically, referring to FIG. 17, which is a schematic diagram of the electronic device 3, and with reference to FIGs. 1 to 16, the electronic device 3 includes the battery 2 according to any one of the foregoing embodiments. In this embodiment, the electronic device is a mobile phone. It can be understood that in other embodiments of this application, the electronic device may alternatively be any other electronic device such as a tablet, a computer, a drone, a remote controller, or an electric car.

The electronic device 3 includes the foregoing electrode plate assembly, so it can also alleviate the current situation that it is difficult for electrons of the conductive material layer on the side facing away from the tab to flow to the tab.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1. A battery, comprising an electrode plate assembly, wherein the electrode plate assembly comprises an electrode plate and a first tab, wherein the electrode plate comprises a current collector, and the current collector comprises a first conductive material layer, an insulating material layer, and a second conductive material layer that are stacked; wherein
the current collector is partially folded so that the current collector has a main body part and a folded part; the first conductive material layer comprises a first main body region located in the main body part and a first folded region located in the folded part; the second conductive material layer comprises a second main body region located in the main body part and a second folded region located in the folded part; and along a thickness direction of the main body part, at least a part of the second folded region and the first main body region are located on a first side of the main body part; and
the first tab is electrically connected to both the first main body region and the second folded region.

2. The battery according to claim 1, wherein the main body part has a first notch, wherein the first notch is formed by folding the folded part relative to the main body part.

3. The battery according to claim 2, wherein a contour of an outer edge of the current collector comprises two long sides respectively arranged at two ends of the current collector along a first direction and two short sides respectively arranged at two ends of the current collector along a second direction, the first direction intersecting with the second direction; wherein
an intersection line between the first main body region and the first folded region is a first intersection line, and an included angle between the first intersection line and an extension direction of the short sides is less than 5°.

4. The battery according to claim 3, wherein the first notch is spaced apart from both of the two short sides.

5. The battery according to claim 3, wherein the first notch extends to one of the short sides; and/or
the first notch extends to one of the long sides.

6. The battery according to claim 2, wherein a contour of an outer edge of the current collector comprises two long sides respectively arranged at two ends of the current collector along a first direction and two short sides respectively arranged at two ends of the current collector along a second direction, the first direction intersecting with the second direction; wherein
an intersection line between the first main body region and the first folded region is a first intersection line, and an included angle between the first intersection line and the long sides is less than 5°.

7. The battery according to claim 6, wherein the first notch is spaced apart from both of the two long sides of the current collector.

8. The battery according to claim 6, wherein the first notch extends to one of the long sides; and/or
the first notch extends to one of the short sides.

9. The battery according to claim 2, wherein the current collector comprises two folded parts, and the first tab is electrically connected to both the two folded parts.

10. The battery according to claim 9, wherein the two folded parts connected to the same tab are folded in opposite directions relative to the main body region.

11. The battery according to claim 10, wherein the first notches corresponding to the two first folded regions are communicated into one notch.

12. The battery according to claim 1, wherein a contour of an outer edge of the main body part comprises two long sides respectively arranged at two ends of the main body part along a first direction and two short sides respectively arranged at two ends of the main body part along a second direction, the first direction intersecting with the second direction; wherein
the folded part is connected to the long side or the short side and is stacked on the main body part.

13. The battery according to claim 2, wherein the main body part comprises:
a base part, wherein a contour of an outer edge of the base part comprises two long sides respectively arranged at two ends of the base part along a first direction and two short sides respectively arranged at two ends of the base part along a second direction, the first direction intersecting with the second direction; and
a connecting part, formed by extending outward from an edge of the base part; wherein
the folded part is connected to an edge of the connecting part and at least partially stacked on the connecting part and/or the main body part.

14. The battery according to any one of claims 2 to 13, wherein the current collector is partially folded so that the current collector has the main body part, the folded part, and a bent part, and along a thickness direction of the main body part, the folded part and the bent part are respectively arranged on two sides of the main body part;
the first conductive material layer comprises the first main body region, the first folded region, and a first bent region located in the bent part; and the second conductive material layer comprises the second main body region, the second folded region, and a second bent region located in the bent part; wherein along a thickness direction of the current collector, at least a part of the first bent region and the second main body region are located at a second side of the current collector, wherein the first side and the second side are two opposite sides of the current collector along the thickness direction; and
the battery further comprises a second tab, wherein the second tab is electrically connected to both the second main body region and the first bent region, and the first tab is electrically connected to the second tab.

15. The battery according to any one of claims 2 to 8, wherein the electrode plate further comprises an active material layer; wherein
a surface of the first conductive material layer has a first coating region provided with the active material layer and a first blank region not provided with the active material layer, and the folded part, the notch, and the first tab are arranged in the first blank region; and
a surface of the second conductive material layer has a second coating region provided with the active material layer and a second blank region not provided with the active material layer, and an end of the notch is communicated with the second blank region.

16. The battery according to claim 1, wherein the battery comprises two electrode plate assemblies and a separator, wherein the separator is arranged between the two electrode plate assemblies.

17. An electronic device, comprising the battery according to any one of claims 1 to 16.
